(19) Europäisches Patentamt / European Patent Office / Office européen des brevets

(11) **EP 3 570 211 B1**

(12) **FASCICULE DE BREVET EUROPEEN**

(45) Date de publication et mention
de la délivrance du brevet:
**16.03.2022 Bulletin 2022/11**

(21) Numéro de dépôt: **19173951.5**

(22) Date de dépôt: **10.05.2019**

(51) Classification Internationale des Brevets (IPC):
*G06K 9/00* *(2022.01)* *G06K 9/62* *(2022.01)*

(52) Classification Coopérative des Brevets (CPC):
**G06K 9/627; G06V 40/28**

(54) **PROCÉDÉ DE RECONNAISSANCE AUTOMATIQUE D'UN GESTE PREDETERMINE D'UN UTILISATEUR**

VERFAHREN ZUR AUTOMATISCHEN ERKENNUNG EINER VORBESTIMMTEN BENUTZERGESTE

METHOD FOR AUTOMATIC RECOGNITION OF A PREDETERMINED USER GESTURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.05.2018 FR 1854115**

(43) Date de publication de la demande:
**20.11.2019 Bulletin 2019/47**

(73) Titulaire: **Commissariat à l'Énergie Atomique et aux Énergies Alternatives
75015 Paris (FR)**

(72) Inventeurs:
- **BOUTET, Jérôme
  38054 GRENOBLE Cedex 09 (FR)**
- **RAMAHEFA-ANDRY, Prince Arnaud
  38100 GRENOBLE (FR)**

(74) Mandataire: **Colombo, Michel
Innovation Competence Group
310, avenue Berthelot
69372 Lyon Cedex 08 (FR)**

(56) Documents cités:
**US-A1- 2011 151 974 US-A1- 2014 372 440
US-A1- 2016 263 458**

**Description**

L'invention concerne un procédé et un dispositif de reconnaissance automatique d'un geste prédéterminé d'un utilisateur ainsi qu'un support d'enregistrement d'informations pour la mise en œuvre de ce procédé.

Des procédés connus de reconnaissance automatique d'un geste prédéterminé d'un utilisateur comportent les étapes suivantes :

a) l'acquisition, à une fréquence d'échantillonnage prédéterminée, des mesures d'un accéléromètre tri-axe et d'un gyromètre tri-axe chacun fixé sur un avant-bras de l'utilisateur,

b) la construction de plusieurs grandeurs physiques caractéristiques du geste de l'utilisateur à partir des mesures acquises de l'accéléromètre et du gyromètre qui ont été réalisées à partir d'un instant td où débute le geste de l'utilisateur et sans prendre en compte les mesures acquises de l'accéléromètre et du gyromètre réalisées avant cet instant $t_d$, puis

c) la classification du geste de l'utilisateur dans une catégorie prédéfinie de geste, choisie parmi plusieurs catégories prédéfinies possibles de gestes, à partir de ces grandeurs physiques caractéristiques construites.

Par exemple, un tel procédé connu est divulgué dans le document US20160263458.

Ces procédés connus comportent une étape de détermination d'un intervalle de temps [$t_d$ ; $t_f$] pendant lequel un geste à reconnaître est réalisé par un boxeur. Ensuite, seules les mesures réalisées à l'intérieur de cet intervalle de temps [$t_d$ ; $t_f$] sont exploitées pour reconnaître le geste du boxeur. Par exemple, ces mesures sont traitées par un classifieur qui associe ces mesures à une catégorie prédéfinie de geste de boxe. Une fois cette association réalisée, le geste de boxe est dit « reconnu ».

L'instant $t_f$ correspond à l'instant où un impact sur une cible est détecté. Par exemple, le document US20160263458 enseigne que cet instant $t_f$ peut être déterminé en comparant la norme de l'accélération instantanée mesurée à un seuil prédéterminé. En effet, l'impact du poing du boxeur sur une cible se traduit par une brusque décélération du poing qui marque la fin du geste du boxeur.

Un autre document US20140372440 enseigne que cet instant $t_f$ peut aussi être déterminé à l'aide d'un capteur de pression qui détecte l'impact du poing sur une cible.

Une fois l'instant $t_f$ déterminé, l'instant td est classiquement déterminé en soustrayant à l'instant $t_f$ une durée prédéterminée qui correspond approximativement à la durée classique d'un geste à reconnaître. Ainsi, dans les procédés connus, le classifieur traite notamment les mesures réalisées par l'accéléromètre et le gyromètre juste avant, et souvent pendant, l'impact sur une cible.

L'invention vise à proposer un procédé de reconnaissance automatique d'un geste prédéterminé d'un utilisateur plus fiable.

Elle a donc pour objet un tel procédé conforme à la revendication 1.

Les modes de réalisation de ce procédé, peuvent comporter une ou plusieurs des caractéristiques des revendications dépendantes.

L'invention a également pour objet un support d'enregistrement d'informations, lisible par un microprocesseur, comportant des instructions pour l'exécution du procédé objet de l'invention lorsque ces instructions sont exécutées par le microprocesseur.

L'invention a aussi pour objet un dispositif de reconnaissance automatique d'un geste prédéterminé d'un utilisateur pour la mise en œuvre du procédé revendiqué.

L'invention sera mieux comprise à la lecture de la description qui va suivre, donnée uniquement à titre d'exemple non limitatif, et faite en se référant aux dessins sur lesquels :

- la figure 1 est une illustration schématique de l'avant-bras d'un boxeur équipé d'un dispositif de reconnaissance automatique d'un geste d'un boxeur ;
- la figure 2 est une illustration schématique de l'architecture du dispositif de la figure 1;
- la figure 3 est une illustration schématique d'une machine d'états mise en œuvre par le dispositif de la figure 1 ;
- la figure 4 est une illustration schématique d'un réseau de neurones mis en œuvre dans le dispositif de la figure 1 ;
- les figures 5 et 6 sont des organigrammes de procédés de reconnaissance automatique d'un geste du boxeur susceptibles d'être mis en œuvre par le dispositif de la figure 1 ;
- les figures 7 à 17 sont des illustrations schématiques de différents gestes du boxeur susceptibles d'être traités par le dispositif de la figure 1.

Sur ces figures, les mêmes références numériques désignent les mêmes éléments.

Chapitre I : Exemples de modes de réalisation

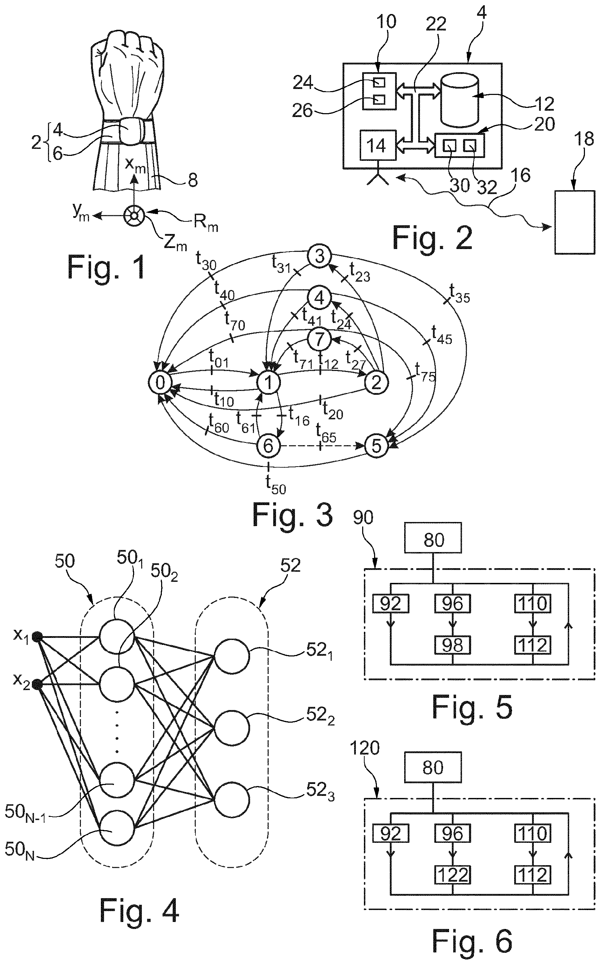

La figure 1 représente un dispositif 2 de reconnaissance automatique d'un geste d'un boxeur. Le dispositif 2 comporte :

- un boîtier 4 à l'intérieur duquel sont logés l'ensemble des composants électroniques nécessaires pour reconnaître automatiquement un geste du boxeur, et
- des moyens 6 de fixation de ce boîtier 4 sur un avant-bras 8 d'un boxeur. Le boîtier 4 est par exemple rigide.

Ici, l'avant-bras 8 est par exemple l'avant-bras droit du boxeur.

La figure 1 représente également un repère direct $R_m$ fixé sans aucun degré de liberté à l'avant-bras 8 et plus précisément au dispositif 2. Ce repère mobile $R_m$ comporte trois axes parallèles, respectivement, à trois directions $X_m$, $Y_m$ et $Z_m$ orthogonales entre elles. La direction $X_m$ s'étend dans la direction longitudinale de l'avant-bras 8 en allant du coude du boxeur vers le poing du boxeur.

La figure 2 représente plus en détail les composants du boîtier 4. Le boîtier 4 comporte :

- un microprocesseur 10 programmable apte à exécuter des instructions enregistrées dans une mémoire,
- une mémoire 12 dans laquelle sont enregistrées les instructions et les données nécessaires pour l'exécution du procédé de la figure 5 ou 6,
- un émetteur-récepteur 14 apte à établir une liaison sans fil 16 de transmission d'informations avec un serveur distant 18,
- une centrale inertielle 20 également connue sous l'acronyme IMU (« Inertial Measurment Unit »), et
- un bus 22 de transmission d'informations permettant aux différents composants du boîtier 4 d'échanger entre eux des informations.

La centrale inertielle 20 comporte notamment un accéléromètre tri-axes 30 et un gyromètre tri-axes 32.

Le microprocesseur 10 implémente notamment :

- un module 24 de validation des gestes à reconnaître, et
- un classifieur 26 apte à classer les gestes à reconnaître dans une catégorie prédéfinie de gestes.

Le module 24 et le classifieur 26 peuvent être implémentés sous forme matérielle ou logicielle. Ici, par exemple, ils sont implémentés sous forme logicielle.

L'accéléromètre 30 mesure l'accélération du boîtier 4, et donc de l'avant-bras 8, le long de trois axes de mesure distincts. De préférence, les trois axes de mesure de l'accéléromètre 30 sont respectivement parallèles aux directions $X_m$, $Y_m$ et $Z_m$.

Le gyromètre 32 mesure la vitesse angulaire du boîtier 4, et donc de l'avant-bras 8, autour de trois axes distincts. De préférence, les trois axes de mesure du gyromètre 32 sont respectivement parallèles aux directions $X_m$, $Y_m$ et $Z_m$.

Le module 24 est ici implémenté sous la forme d'une machine d'états. Les différents états de cette machine et les transitions entre ces états sont représentés sur la figure 3. Sur cette figure 3, les différents états possibles sont représentés par des cercles comportant le numéro de l'état correspondant. Ainsi, par exemple, l'état « 0 » est représenté par un cercle comportant le chiffre 0. Les transitions $t_{ij}$ entre états sont représentées par des flèches orientées. Le sens de la flèche indique l'ordre dans lequel il est possible de passer d'un état précédent à l'état suivant. Les indices « i » et « j » de la transition $t_{ij}$ désignent, respectivement, l'état précédent « i » et l'état suivant « j » de cette transition. Chacune de ces transitions est associée à une condition représentée par une barre qui coupe cette transition. Le module 24 passe d'un état précédent à un état suivant uniquement lorsque la condition associée à la transition qui relie ces deux états est satisfaite.

Le module 24 est conçu pour valider que le geste actuel du boxeur est bien un geste à reconnaître. Le geste actuel est celui que le boxeur est en train d'exécuter. Ainsi, le module 24 élimine les gestes parasites, c'est-à-dire des gestes du boxeur qui modifient les mesures de l'accéléromètre 30 ou du gyromètre 32 mais qui ne sont pas des gestes à reconnaître. Ici, les gestes du boxeur que l'on cherche à reconnaître sont des coups de poings portés sur une cible matérielle ou dans le vide tandis que les gestes parasites correspondent par exemple à des gestes dus aux sautillements du boxeur.

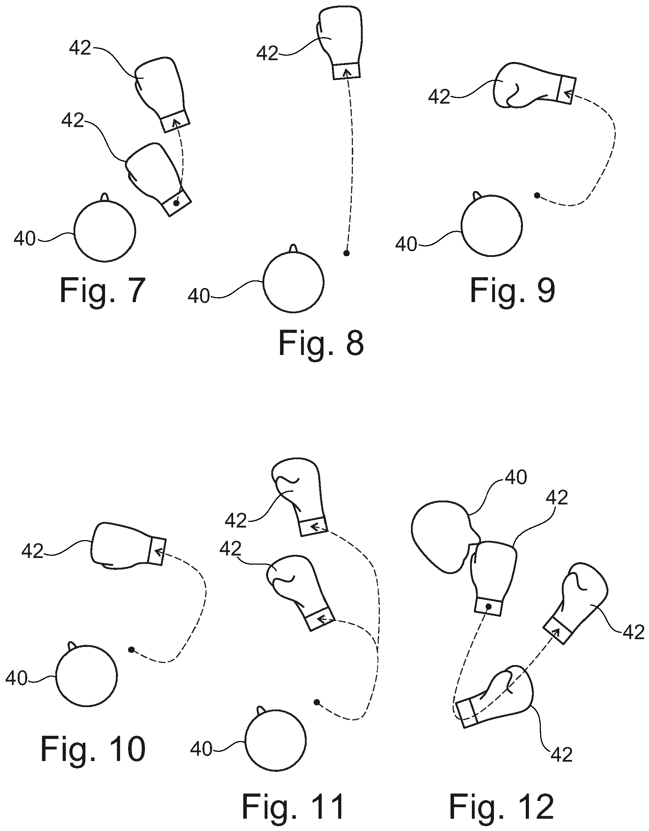

À titre d'illustration, les figures 7 à 17 représentent différents gestes que le boxeur peut réaliser. Sur ces figures, le cercle avec un appendice représente la tête 40 du boxeur. Dans les figures 7 à 11 et 14 à 15, la tête et le geste du boxeur sont vus par-dessus. Dans les figures 12, 13, 16 et 17, la tête 40 et le geste du boxeur sont représentés de profil. Sur ces figures, la référence 42 désigne un gant de boxe à l'intérieur duquel est logé le poing du boxeur. Sur ces figures, une flèche en pointillés représente la trajectoire du gant 42 depuis le début du geste du boxeur jusqu'à la fin de ce geste.

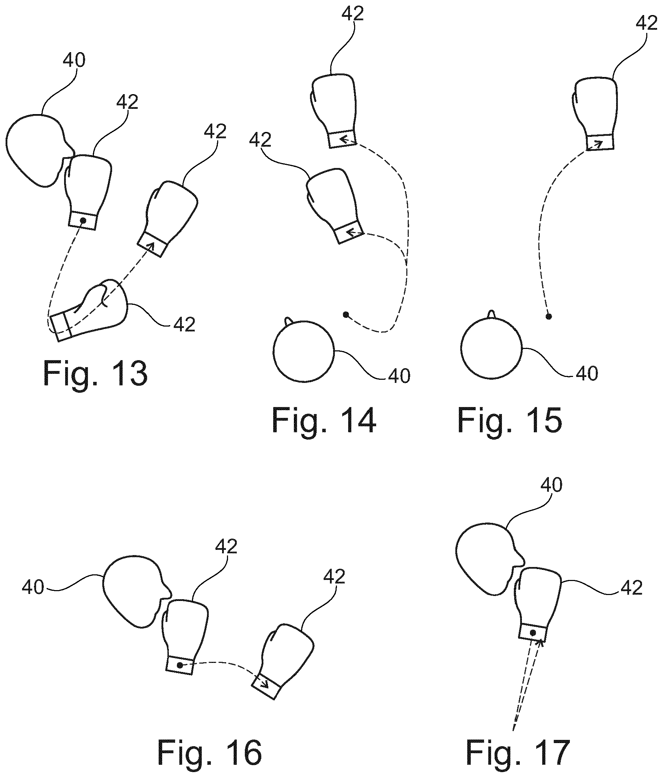

Le point noir représente le début de la trajectoire du geste du boxeur. Plusieurs gants 42 sont représentés sur les figures 7, 12, 13 et 16. Dans ces quatre figures, chaque gant 42 illustre une position du même gant à un emplacement particulier de la trajectoire lors de la réalisation du geste du boxeur. Les figures 11 et 14 représentent chacune deux gestes du boxeur et chaque gant 42 représente la fin de chacun de ces gestes.

Les figures 7 à 14 correspondent à des gestes du boxeur qu'il peut être intéressant de reconnaître. Les figures 15 à 17 illustrent au contraire des gestes parasites du boxeur. Plus précisément, les figures 7 à 14 représentent respectivement :

- un direct court,
- un direct long,
- un crochet avec le pouce en haut,
- un crochet avec le pouce vers le boxeur,
- un crochet connu sous le terme anglais de « swing », se traduisant par un contact avec l'intérieur du gant (la figure 11 représente un « swing » court et un « swing » long),
- un crochet montant connu sous le terme de « uppercut » avec le pouce vers l'extérieur,
- un « uppercut » avec le pouce vers le boxeur,
- un crochet court et un crochet long se terminant par un contact avec le pouce.

Les figures 15 à 17 représentent les gestes parasites, qui correspondent respectivement à :

- une simple extension du bras du boxeur,
- un va-et-vient du poing du boxeur sur un arc de cercle, et
- un va-et-vient du poing du boxeur dans une direction correspondant, par exemple, à un sautillement du boxeur.

À titre d'exemple de gestes parasites supplémentaires que le module 24 doit éliminer, on peut également signaler :

- un coup de poing porté sur le boxeur par un autre boxeur,
- un coup de poing porté par le boxeur sur une cible avec le poing situé sur l'autre avant-bras que l'avant-bras 8.

Le module 24 est conçu pour valider si le geste actuel du boxeur est ou n'est pas un geste à reconnaître. Le classifieur 26 est exécuté seulement si le module 24 a validé au préalable que le geste actuel est un geste à reconnaître.
Le module 24 est ici aussi conçu pour construire, en même temps qu'il procède à la validation du geste du boxeur, des grandeurs physiques caractéristiques du geste du boxeur. Ces grandeurs physiques caractéristiques sont destinées à être traitées par le classifieur 26 pour reconnaître ce geste. Pour cela, le module 24 construit ces grandeurs physiques caractéristiques uniquement à partir des mesures réalisées à l'intérieur d'un intervalle de temps $[t_d ; t_i]$. L'instant td correspond à l'instant où débute le geste du boxeur. L'instant $f_i$ est un instant, postérieur à l'instant $t_d$, où l'accélération mesurée dans la direction $X_m$ par l'accéléromètre 30 change de signe et devient négative. L'instant $t_i$ est antérieur à la brusque décélération qui marque la fin du geste du boxeur. Par exemple, l'instant $t_i$ est le dernier instant, postérieur à l'instant $t_d$, où l'accélération change de signe pour devenir négative avant cette brusque décélération. Par convention, ici, l'accélération est positive le long d'un axe de mesure lorsque l'avant-bras 8 accélère dans le sens de la direction $X_m$ représentée sur la figure 1. Dans le cas contraire, l'accélération est négative. De même, par convention, la vitesse angulaire mesurée par le gyromètre 32 autour d'un axe est positive lorsque le déplacement en rotation de l'avant-bras 8 autour de cet axe se produit dans le sens rétrograde ou indirect et devient négative lorsque l'avant-bras 8 se déplace en rotation selon un sens direct. Avec ces conventions de signe, l'accélération dans la direction $X_m$ est positive juste avant l'instant $t_i$ et devient négative juste après l'instant $t_i$. Bien entendu, les conventions peuvent être modifiées de manière à ce que l'accélération devienne positive lors d'une décélération et que la vitesse angulaire devienne négative lors d'une rotation selon le sens indirect.
La figure 3 représente un exemple de réalisation d'une machine d'états implémentée dans le module 24 et qui permet de remplir les différentes fonctions décrites ci-dessus. Les différents états et différentes conditions associés aux transitions $t_{ij}$ de cette machine d'états sont maintenant décrits plus en détail.
Par la suite, on note $t_c$ l'instant le plus récent auquel le microprocesseur 10 a acquis de nouvelles mesures de la centrale inertielle 20. Les nouvelles mesures de cette centrale inertielle 20 sont acquises à une fréquence $f_e$ d'échantillonnage. Ainsi, les instants $t_c$ se répètent périodiquement à la fréquence $f_e$. Les nouvelles mesures de l'accéléromètre 30 dans les directions $X_m$, $Y_m$ et $Z_m$ acquises à l'instant $t_c$ sont notées, respectivement, $A_{tcXm}$, $A_{tcYm}$ et $A_{tcZm}$. Les nouvelles mesures du gyromètre 32 dans les directions $X_m$, $Y_m$ et $Z_m$ acquises à l'instant $t_c$ sont notées $G_{tcXm}$, $G_{tcYm}$ et $G_{tcZm}$.
Dans chaque état de la machine d'états, le module 24 attend que la condition associée aux transitions qui lui permettent de passer à un état suivant soit satisfaite.

L'état « 0 » correspond à l'état dans lequel se trouve la machine d'états en absence de mouvement significatif de l'avant-bras 8. Par mouvement significatif, on désigne ici un geste qui provoque une accélération de l'avant-bras 8 telle que la norme de l'accélération mesurée par l'accéléromètre 30 dépasse un seuil prédéterminé THR0. Typiquement, le seuil THR0 est compris entre 0 et 0,8 g (1 g = 9,80 m/s$^2$). Par exemple, le seuil THR0 est supérieur à 0,3 g ou 0,5 g et inférieur à 0,8 g.

À chaque fois que la machine d'états arrive dans l'état « 0 », le module 24 exécute les opérations suivantes :

- réinitialisation, à leurs valeurs par défauts, des variables dont les valeurs sont construites par le module 24 en fonction des mesures de l'accéléromètre 30 et du gyromètre 32, et donc en particulier, réinitialisation à leurs valeurs par défauts des valeurs des grandeurs physiques caractéristiques construites, et
- réinitialisation à leurs valeurs initiales les différents compteurs de temps mis à jour lors de l'exécution de la machine d'états.

Ici, les valeurs par défaut des variables et notamment des grandeurs physiques caractéristiques construites, sont nulles.

Dans ce mode de réalisation, la machine d'états utilise des compteurs de temps dont les noms figurent dans le tableau ci-dessous.

| Nom du compteur de temps | Valeur initiale | unité |
|---|---|---|
| CAR0 | $50 \pm 25$ | Millisecondes |
| CAR1 | Compris entre 500 et 1000 | |
| CAR2 | $50 \pm 25$ | |
| CAR3 | Inférieur à 100 | |
| CAR4 | $50 \pm 25$ | |

Dans ce tableau, pour chaque compteur de temps, une plage de valeurs initiales est indiquée. De préférence, la valeur initiale de chaque compteur est donc choisie dans la plage indiquée dans le tableau ci-dessus.

L'état « 1 » correspond à l'état dans lequel se trouve le module 24 quand débute un mouvement significatif de l'avant-bras 8. Le module 24 reste dans cet état tant que l'avant-bras 8 ne décélère pas significativement dans la direction $X_m$.

Dans l'état « 1 », à chaque fois que de nouvelles mesures sont acquises par le module 24 à l'instant courant $t_c$, le module 24 exécute les opérations suivantes :

- calcul de la norme $A_{tc}$ de l'accélération instantanée de l'avant-bras 8 à partir des mesures acquises les plus récentes de l'accélération mesurée dans les directions $X_m$, $Y_m$ et $Z_m$ par l'accéléromètre 30,
- seulement si la norme $A_{tc}$ de l'accélération instantanée est inférieure au seuil THR0, décrémentation de $T_e$ du compteur CARO, où $T_e$ est la période d'échantillonnage ($T_e = 1/f_e$)
- indépendamment de la norme $A_{tc}$ calculée de l'accélération instantanée, décrémentation de $T_e$ du compteur CAR1,
- indépendamment de la norme $A_{tc}$ calculée de l'accélération instantanée, détermination si l'instant présent correspond à l'instant $t_i$ où l'accélération dans la direction $X_m$ change de signe et par exemple devient négative, et
- indépendamment de la norme $A_{tc}$ calculée de l'accélération instantanée, construction des grandeurs physiques caractéristiques du geste actuellement réalisé par le boxeur.

Dans ce mode de réalisation, les grandeurs physiques caractéristiques construites dans l'état « 1 » à chaque instant $t_c$ sont les suivantes :

- les minimums $A_{minXm}$, $A_{minYm}$ et $A_{minZm}$ des accélérations instantanées mesurés, respectivement, dans les directions $X_m$, $Y_m$ et $Z_m$ pendant l'intervalle de temps $[t_d ; t_c]$,
- les maximums $A_{maxXm}$, $A_{maxYm}$ et $A_{maxZm}$ des accélérations instantanées mesurés, respectivement, dans les directions $X_m$, $Y_m$ et $Z_m$ pendant l'intervalle de temps $[t_d ; t_c]$,
- les valeurs moyennes $A_{moyXm}$, $A_{moyYm}$ et $A_{moyZm}$ des accélérations instantanées mesurées, respectivement, dans les directions $X_m$, $Y_m$ et $Z_m$ pendant l'intervalle de temps $[t_d ; t_c]$,
- les minimums $V_{minXm}$, $V_{minYm}$ et $V_{minZm}$ des vitesses instantanées de l'avant-bras 8 dans les directions, respectivement, $X_m$, $Y_m$ et $Z_m$ pendant l'intervalle de temps $[t_d ; t_c]$,

- les maximums $V_{maxXm}$, $V_{maxYm}$ et $V_{maxZm}$ des vitesses instantanées de l'avant-bras 8 dans les directions, respectivement, $X_m$, $Y_m$ et $Z_m$ pendant l'intervalle de temps $[t_d ; t_c]$,
- les valeurs moyennes $V_{moyXm}$, $V_{moyYm}$ et $V_{moyZm}$ des vitesses instantanées de l'avant-bras 8 dans les directions, respectivement, $X_m$, $Y_m$ et $Z_m$ pendant l'intervalle de temps $[t_d ; t_c]$,
- les minimums $G_{minXm}$, $G_{minYm}$ et $G_{minZm}$ des vitesses angulaires instantanées de l'avant-bras 8 autour des axes parallèles aux directions, respectivement, $X_m$, $Y_m$ et $Z_m$ pendant l'intervalle de temps $[t_d ; t_c]$,
- les maximums $G_{maxXm}$, $G_{maxYm}$ et $G_{maxZm}$ des vitesses angulaires instantanées de l'avant-bras 8 autour des axes parallèles aux directions, respectivement, $X_m$, $Y_m$ et $Z_m$ pendant l'intervalle de temps $[t_d ; t_c]$,
- les valeurs moyennes $G_{moyXm}$, $G_{moyYm}$ et $G_{moyZm}$ des vitesses angulaires instantanées de l'avant-bras 8 autour des axes parallèles aux directions, respectivement, $X_m$, $Y_m$ et $Z_m$ pendant l'intervalle de temps $[t_d ; t_c]$,
- les minimums $D_{minXm}$, $D_{minYm}$ et $D_{minZm}$ des distances instantanées parcourues par l'avant-bras 8 dans les directions, respectivement, $X_m$, $Y_m$ et $Z_m$ pendant l'intervalle de temps $[t_d ; t_c]$,
- les maximums $D_{maxXm}$, $D_{maxYm}$ et $D_{maxZm}$ des distances instantanées parcourues par l'avant-bras 8 dans les directions, respectivement, $X_m$, $Y_m$ et $Z_m$ pendant l'intervalle de temps $[t_d ; t_c]$, et
- les valeurs moyennes $D_{moyZm}$, $D_{moyYm}$ et $D_{moyZm}$ des distances instantanées parcourues par l'avant-bras 8 dans les directions, respectivement, $X_m$, $Y_m$ et $Z_m$ pendant l'intervalle de temps $[t_d ; t_c]$.

L'instant $t_d$ est égal au premier instant $t_c$ où le module 24 est dans l'état « 1 » et correspond donc à l'instant où débute le geste du boxeur.

Ici, le module 24 détermine, à chaque instant $t_c$ successif :

- les vitesses instantanées $V_{tcXm}$, $V_{tcYm}$ et $V_{tcZm}$ dans les directions, respectivement, $X_m$, $Y_m$ et $Z_m$,
- la norme $V_{tc}$ de la vitesse instantanée à partir des vitesses instantanées $V_{tcXm}$, $V_{tcYm}$ et $V_{tcZm}$,
- les distances instantanées parcourues $D_{tcXm}$, $D_{tcYm}$ et $D_{tcZm}$ dans l'intervalle $[t_d ; t_c]$ dans les directions, respectivement, $X_m$, $Y_m$ et $Z_m$, et
- la norme $A_{tc}$ de l'accélération instantanée à partir des accélérations acquises dans les directions $X_m$, $Y_m$ et $Z_m$.

Par exemple, ici, le module 24 détermine les vitesses $V_{tcXm}$, $V_{tcYm}$ et $V_{tcZm}$ par intégration des mesures de l'accéléromètre 30 dans les directions $X_m$, $Y_m$ et $Z_m$. La distance instantanée $D_{tcXm}$ est par exemple calculée en ajoutant à la distance instantanée $D_{(tc-1)Xm}$ calculée à l'instant précédent $t_{c-1}$, la distance supplémentaire parcourue entre les instants $t_{c-1}$ et $t_c$. Cette distance supplémentaire est positive si le déplacement est dans la direction $X_m$ et négative si le déplacement est dans la direction opposée.

À chaque instant $t_c$, dans l'état « 1 », le module 24 recherche l'instant $t_i$. Pour cela, ici, à chaque instant $t_c$, le module 24 vérifie si cet instant $t_c$ correspond à l'instant $t_i$, c'est-à-dire à un instant où l'accélération $A_{tcXm}$ dans la direction $X_m$ change de signe pour devenir négative. Par exemple, pour faire cela, le module 24 vérifie si l'accélération acquise $A_{tcXm}$ est négative et si l'accélération acquise $A_{tc-1,Xm}$ à l'instant $t_{c-1}$ précédent est positive. Dans l'affirmative, cet instant $t_c$ est alors l'instant $t_i$ où l'accélération dans la direction $X_m$ change de signe pour devenir négative. A cet instant $t_i$, le module 24 enregistre dans la mémoire 12 :

- les vitesses instantanées $V_{tiXm}$, $V_{tiYm}$ et $V_{tiZm}$,
- la norme $V_{ti}$ de la vitesse instantanée à l'instant $t_i$,
- la norme $A_{ti}$ de l'accélération instantanée à l'instant $t_i$.

Le module 24 enregistre aussi dans la mémoire 12 les valeurs actuelles des grandeurs physiques caractéristiques construites à cet instant $t_i$. Ainsi, les grandeurs physiques caractéristiques enregistrées sont seulement construites à partir des mesures de la centrale inertielle 20 réalisées dans l'intervalle $[t_d ; t_i]$.

Enfin, dans l'état « 1 », le module 24 réinitialise le compteur CAR3 à sa valeur initiale si la condition associée à une transition $t_{16}$ est satisfaite. La transition $t_{16}$ est décrite plus loin dans un tableau des conditions qui associe à chaque transition de la machine d'états de la figure 3, la condition correspondante.

L'état « 2 » correspond à l'état dans lequel se trouve la machine d'états lorsque l'on approche de la fin du geste du boxeur. L'état « 2 » correspond donc à une phase de décélération de l'avant-bras 8.

Dans l'état « 2 », le module 24 :

- calcule la norme $A_{tc}$ de l'accélération instantanée,
- seulement si la norme $A_{tc}$ est inférieure au seuil THRO, il décrémente de $T_e$ le compteur CARO, et
- seulement si la condition associée à la transition $t_{24}$ est satisfaite, il réinitialise le compteur CAR4 à sa valeur initiale (voir plus loin le tableau des conditions qui associe à cette transition $t_{24}$ une condition)

Les états « 3 », « 4 », « 6 » et « 7 » sont des états utilisés pour valider ou infirmer que le geste actuel du boxeur est un geste à reconnaître et non un geste parasite. Dans le cas où le geste actuel est bien un geste à reconnaître, la machine d'états passe dans l'état « 5 ». Dans le cas où il n'est pas possible de confirmer que le geste actuel est un geste à reconnaître :

- soit la machine d'états retourne à l'état « 0 », s'il est établi que le geste en cours est un geste parasite,
- soit la machine d'états retourne à l'état « 1 », s'il n'a pas été possible, à ce stade, soit de valider soit d'infirmer que le geste en cours est un geste à reconnaître.

Le retours dans l'état « 1 » permet éventuellement de valider par la suite que le geste en cours est bien un geste à reconnaître.

Lorsque la machine d'états passe de l'état « 5 » à l'état « 0 », cela signifie que le geste à reconnaître est terminé. Dès son retour dans l'état « 0 », le module 24 est capable d'identifier le geste suivant du boxeur.

Dans chacun des états « 3 », « 4 », « 5 », « 6 » et « 7 », le module 24 réalise les opérations suivantes :

- il calcule la norme $A_{tc}$ de l'accélération instantanée,
- seulement si la norme $A_{tc}$ est inférieure au seuil THRO, il décrémente de $T_e$ le compteur CAR0.

De plus, dans l'état « 3 », le module 24 :

- si la condition associée à la transition $t_{35}$ est satisfaite, réinitialise le compteur CAR2 à sa valeur initiale et lève un drapeau appelé ici « coup détecté », et
- si la condition associée à la transition $t_{31}$ est satisfaite, réinitialise le compteur CAR1 à sa valeur initiale et réinitialise la recherche de l'instant $t_i$ mise en œuvre dans l'état « 1 ».

La réinitialisation de la recherche de l'instant $t_i$ consiste à considérer que l'instant $t_i$ n'a pas encore été atteint et à relancer la recherche de cet instant $t_i$. Ainsi, lorsque l'on retourne dans l'état « 1 », la construction des grandeurs physiques caractéristiques est reprise jusqu'au prochain instant $t_i$ trouvé.

Dans l'état « 4 », le module 24 :

- décrémente, à chaque instant $t_c$, le compteur CAR4 de $T_e$,
- si la condition associée à la transition $t_{45}$ est satisfaite, réinitialise le compteur CAR2 à sa valeur initiale et lève le drapeau « coup détecté »,
- si la condition associée à la transition $t_{41}$ est satisfaite, réinitialise le compteur CAR1 à sa valeur initiale et réinitialise la recherche de l'instant $t_i$.

Dans l'état « 5 », le module 24 décrémente, à chaque instant $t_c$, le compteur CAR2 de $T_e$.

Dans l'état « 6 », le module 24 :

- décrémente, à chaque instant $t_c$, le compteur CAR3 de $T_e$,
- réinitialise le compteur CAR2 à sa valeur initiale et lève le drapeau « coup détecté » si la condition associée à la transition $t_{65}$ est satisfaite,
- si la condition associée à la transition $t_{61}$ est satisfaite, réinitialise le compteur CAR1 à sa valeur initiale et réinitialise la recherche de l'instant $t_i$ mise en œuvre dans l'état « 1 ».

Dans l'état « 7 », le module le 24 :

- si la condition associée à la transition $t_{75}$ est satisfaite, réinitialise le compteur CAR2 à sa valeur initiale et lève le drapeau « coup détecté », et
- si la condition associée à la transition $t_{71}$ est satisfaite, réinitialise le compteur CAR1 à sa valeur initiale et réinitialise recherche de l'instant $t_i$ mise en œuvre dans l'état « 1 ».

Les conditions associées aux différentes transitions $t_{ij}$ de la machine d'états représentée sur la figure 3 sont décrites dans le tableau suivant.

| *Transition* | *Condition associée à la transition* |
|---|---|
| $t_{01}$ | $A_{tc} > THR0$ |

(suite)

| Transition | Condition associée à la transition |
|---|---|
| $t_{10}$ | CAR1 = 0 **OU** CAR0 = 0 |
| $t_{12}$ | $A_{tcXm}$ < THR1 **ET** $V_{tiXm}$ > 0 |
| $t_{16}$ | $A_{tcXm}$ < THR1 **ET** $V_{tiXm} \leq 0$ **ET** ($V_{tiYm}/V_{tc}$ > 0,7 **OU** $V_{tiZm}/V_{tc}$ > 0,7) |
| $t_{61}$ | CAR3 = 0 |
| $t_{20}$ | CAR0 = 0 |
| $t_{24}$ | $V_{tcXm} \leq 0$ |
| $t_{27}$ | $V_{tcXm}$ > 0 **ET** ( $V_{tiXm}/V_{ti}$ > 0.3 **OU** $V_{tiYm}/V_{ti}$ > 0.7 ) |
| $t_{23}$ | $v_{tcXm}$ > 0 **ET** ( $V_{tiXm}/V_{ti} \leq 0.3$ **OU** $V_{tiYm}/V_{ti} \leq 0.7$ ) |
| $t_{71}$ | ($A_{tcXm}$ > 0) **OU** (($V_{tcXm} \leq 0$) **ET** ($A_{tcXm} \geq (1 - V_{tiXm}/V_{ti})$ X THR3)) |
| $t_{41}$ | CAR4 = 0 |
| $t_{30}$ | CAR0 = 0 |
| $t_{31}$ | $V_{tcXm}$ < 0 **ET** $A_{tcXm} \geq$ THR3 |
| $t_{35}$ | $V_{tcXm}$ < 0 **ET** $A_{\mathbf{tcXm}}$ < THR3 |
| $t_{40}$ | CAR0 = 0 |
| $t_{45}$ | $A_{tcXm}$ < THR5 |
| $t_{70}$ | CAR0 = 0 |
| $t_{75}$ | ( $V_{tcXm}$ > 0 **ET** $A_{tcXm}$ < THR4 ) **OU** ($V_{tcXm} \leq 0$ ET $A_{tcxm}$ < $(1 - V_{tiXm}/V_{ti})$ X THR3) |
| $t_{60}$ | CAR0 = 0 |
| $t_{65}$ | $A_{tcXm}$ < THR2 |
| $t_{50}$ | (Variance($G_{tcXm}$) > THR6 **ET** Variance($G_{tcZm}$) > THR6) **OU** CAR2 = 0 **OU** CAR0 = 0 |

Dans le tableau ci-dessus :

- le symbole « x » désigne l'opération de multiplication,
- le symbole « Variance (...) » désigne une fonction qui calcule la variance de la mesure, cette variance étant calculée à partir des mesures réalisées pendant une fenêtre glissante pendant l'intervalle [$t_d$ ; $t_c$].

Les valeurs des différents seuils prédéfinis apparaissant dans les conditions sont choisies conformément aux indications données dans le tableau ci-dessous :

| Seuils | Valeurs numériques | Unité des valeurs numériques |
|---|---|---|
| THR0 | Compris entre 0 et 0.8 | G (1 g = 9,81 m/s$^2$) |
| THR1 | -2.5 $\pm$ 0,5 | |
| THR2 | Inférieur à -7 | |
| THR3 | -4 $\pm$ 1 | |
| THR4 | -5 $\pm$ 1 | |
| THR5 | -4 | |
| THR6 | Supérieur à 20000 | Degré/seconde |

La transition $t_{12}$ correspond à la détection d'une première forte décélération précédée d'un mouvement vers l'avant de l'avant-bras 8 durant laquelle la vitesse dans la direction $X_m$ est certainement positive. Cette situation se rencontre, par exemple, lorsque le geste est exécuté par le boxeur est l'un de ceux représentés sur les figures 7 à 10 et 13.

Les transitions $t_{16}$ et $t_{65}$ correspondent à la détection d'une première forte décélération et, dans le cas de la transition $t_{16}$, précédée d'un geste où la vitesse dans la direction $Y_m$ ou $Z_m$ est prépondérante au début de cette décélération. Cette situation se rencontre par exemple lorsque le geste exécuté par le boxeur est l'un de ceux représentés sur les figures 11 et 14. Le cas où les vitesses $V_{tiYm}$ ou $V_{tiZm}$ sont négatives, correspond, par exemple, au geste de la figure 15.

L'état « 2 » est atteint lorsque, au début de la décélération, la vitesse $V_{tiXm}$ est positive. Dès lors, l'annulation de la vitesse $V_{tcXm}$ (transition $t_{24}$) indique l'arrêt complet du geste. L'état « 4 » permet alors de tester si l'arrêt du geste est brutal et, dans l'affirmative, de valider qu'il s'agit d'un geste à reconnaître (transition $t_{45}$).

Certains boxeurs n'arrêtent pas brusquement leur geste quand ils le réalisent dans le vide notamment lors de la réalisation d'un crochet. Dans ce cas, il y a quand même une brusque décélération de l'avant-bras 8 lorsque l'élongation maximale du bras est atteinte. La transition $t_{27}$ permet de tester si ce geste est assez rapide pour qu'il soit validé comme étant un geste à reconnaître.

Les transitions $t_{31}$, $t_{35}$, $t_{71}$ et $t_{75}$ ont été conçues de façon expérimentale pour éliminer des gestes parasites.

Une variation brusque des vitesses angulaires $G_{tcYm}$ et $G_{tcZm}$ se produit généralement vers la fin du geste du boxeur, c'est-à-dire pour l'élongation maximale du bras, notamment lorsque le boxeur enchaîne plusieurs gestes consécutifs. La transition $t_{50}$ détecte la présence de cette situation qui marque la fin du geste et permet au module 24 de retourner dans l'état initial « 0 ». Cette façon de procéder en utilisant les vitesses angulaires s'est avérée plus fiable que l'utilisation des mesures de l'accélération. En effet, vers la fin du geste du boxeur, le dispositif 2 vibre de sorte que la fin du geste du boxeur est difficile à identifier à partir des seules mesures de l'accélération.

De plus, lorsque le boxeur enchaîne les gestes, la norme $A_{tc}$ peut rester supérieure au seuil THR0 de sorte que seule la transition $t_{50}$ permet de revenir à l'état « 0 » et de correctement reconnaître plusieurs gestes enchaînés les uns après les autres.

Les différents compteurs permettent de limiter la durée de l'étape de validation d'un geste comme étant un geste à reconnaître. Les valeurs initiales des compteurs sont en particulier ajustées pour éviter que cette étape puisse s'étendre sur une durée assez longue pour couvrir deux gestes successifs du boxeur.

L'étape de validation du geste du boxeur est ici aussi limitée par la durée du compteur CAR1 afin de limiter l'accumulation des erreurs de mesure lors des intégrations mises en œuvre pour calculer les vitesses et les distances instantanées.

On va maintenant décrire le fonctionnement du classifieur 26. La figure 4 représente un réseau de neurones implémenté par le classifieur 26. Il s'agit d'un réseau de neurones de faible profondeur connu sous le terme anglais de « shallow neural network ». Ici, ce réseau de neurones comporte une seule couche cachée 50 et une seule couche 52 de sortie. La couche 50 comporte N neurones cachés. N est ici compris entre huit et douze. Par exemple, N est égal à dix.

Pour simplifier la figure 4, seuls quatre neurones $50_1$, $50_2$, $50_{N-1}$ et $50_N$ de cette couche 50 ont été représentés. Chaque neurone de la couche 50 reçoit toutes les grandeurs physiques caractéristiques construites par le module 24. Chaque neurone de la couche 50 calcule une somme pondérée $S_j$ selon la relation suivante :

$$S_j = \sum_1^N w_{ij} x_i + b_j$$

où :

- l'indice i est un identifiant d'une grandeur physique caractéristique construite,
- $x_i$ est la valeur de la grandeur physique construite,
- $w_{ij}$ est un poids prédéterminé par apprentissage,
- $b_j$ est un biais prédéterminé par apprentissage.

Ensuite, le neurone génère une valeur $N_j$ sur sa sortie selon la relation suivante $N_j = f(S_j)$, où la fonction f est une fonction d'activation. Ici, la fonction d'activation utilisée pour chaque neurone de la couche 50 est la fonction tangente hyperbolique ou la fonction sigmoïde.

Pour simplifier l'illustration et la description, ici, le dispositif 2 est décrit dans le cas particulier où il est conçu pour reconnaître seulement les trois gestes de boxe suivants :

- un direct long du bras avant connu sous le terme anglais de « jab »,
- un crochet du bras avant connu sous le terme anglais de « hook », et

- un coup de poing remontant connu sous le terme anglais de « uppercut ».

Toutefois, à partir de l'enseignement donné dans cette demande, l'homme du métier sait comment adapter ce réseau de neurones pour reconnaître d'autres gestes supplémentaires.

Le classifieur 26 est conçu pour classer les grandeurs physiques caractéristiques reçues dans trois classes ou catégories prédéfinies, correspondant chacune à un geste respectif parmi les trois gestes énumérés ci-dessus.

Pour cela, la couche 52 comporte seulement trois neurones, $52_1$, $52_2$ et $52_3$. Chacun de ces trois neurones correspond à une catégorie prédéfinies de gestes de boxe respective. Chacun des neurones $52_1$ à $52_3$ est connecté à la sortie de chacun des neurones de la couche 50.

De façon similaire à ce qui a été décrit pour les neurones de la couche 50, chaque neurone $52_1$ à $52_3$ calcule une somme pondérée à partir des sorties $N_j$ des neurones de la couche 50.

La fonction d'activation des neurones $52_1$ à $52_3$ est ici une fonction qui identifie le neurone, parmi les trois neurones $52_1$ à $52_3$, qui a calculé la somme pondérée la plus élevée et donc la catégorie dans laquelle les grandeurs physiques caractéristiques traitées sont classées. Le neurone ainsi identifié correspond au geste prédéfini reconnu du boxeur.

Le procédé de reconnaissance automatique d'un geste d'un boxeur à l'aide du dispositif 2 va maintenant être décrit en référence à la figure 5.

Lors d'une étape 80 d'apprentissage, les poids $w_{ij}$ et les biais $b_j$ de chaque neurone du réseau de neurones du classifieur 26 sont déterminés. Pour cela, le réseau de neurones est entraîné sur une base de données contenant des jeux de grandeurs physiques caractéristiques construites et, pour chacun de ces jeux, la catégorie prédéfinie de gestes de boxe à laquelle il appartient. Chaque jeu de grandeurs physiques caractéristiques est construit, de préférence, par le module 24, lors d'exécution du geste de boxe par un boxeur ou par plusieurs boxeurs. Par exemple, la phase 80 est exécutée lors de la conception du dispositif 2, puis les valeurs des différents poids et différents biais sont enregistrées dans la mémoire 12.

Ensuite, lors d'une phase de reconnaissance 90, le dispositif 2 est utilisé pour reconnaître automatiquement les gestes prédéfinis. Lors de cette phase 90, le dispositif 2 est fixé sur l'avant-bras 8. Initialement, la machine d'états est dans l'état « 0 ».

Ensuite, lors d'une étape de mesure 92, la centrale inertielle 20 mesure en permanence différentes grandeurs physiques fonction du déplacement de l'avant-bras 8. En particulier, lors de l'étape 92, l'accéléromètre 30 mesure en permanence l'accélération dans les directions $X_m$, $Y_m$ et $Z_m$ et le gyromètre 32 mesure en permanence la vitesse angulaire autour d'axes parallèles aux directions $X_m$, $Y_m$ et $Z_m$.

En parallèle, lors d'une étape d'acquisition 96, à chaque instant $t_c$, le microprocesseur 10 acquiert les mesures de la centrale inertielle 20. Ces mesures successivement acquises à différents instants forment une séquence temporelle de mesures successives de l'accélération et de la vitesse angulaire de l'avant-bras 8.

Ensuite, lors d'une étape d'exécution 98, le module 24 exécute à chaque instant $t_c$ la machine d'états décrite précédemment. Dans chaque état, le module 24 vérifie si une condition associée à l'une des transitions est satisfaite. Pour cela, le module 24 utilise les valeurs des variables, décrites en référence à la figure 3, obtenues à partir des mesures les plus récemment acquises.

De plus, le module 24 exécute les opérations spécifiquement associées à l'état courant de la machine d'états et décrites en référence à la figure 3.

Ainsi, lors de l'étape d'exécution 98, le module 24 :

- valide et, en alternance infirme, que le geste actuellement réalisé par le boxeur est un geste à reconnaître, c'est-à-dire que le geste est autre chose qu'un geste parasite et, en parallèle,
- construit des grandeurs physiques caractéristiques de ce geste à partir des seules mesures réalisées dans l'intervalle $[t_d ; t_i]$.

Ici, les grandeurs physiques caractéristiques sont construites dans l'état « 1 ». Le geste actuel du boxeur est un geste à reconnaître par le classifieur 26 si la machine d'états passe dans l'un des états « 3 », « 4 », « 6 » ou « 7 » puis par l'état « 5 ». Dans le cas contraire, c'est qu'il s'agit d'un geste parasite qui n'est pas destiné à être reconnu par le classifieur 26. La machine d'états retourne à l'état « 0 » lorsque le geste à reconnaître est terminé ou lorsqu'il s'agit d'un geste parasite.

En parallèle, lors d'une étape 110, le classifieur 26 est exécuté. Par exemple, l'étape 110 est déclenchée dès que le drapeau « coup donné » est levé par le module 24. En réponse, les grandeurs physiques caractéristiques actuellement enregistrées dans la mémoire 12 sont alors traitées à l'aide du réseau de neurones précédemment décrit. Suite à ce traitement, les grandeurs physiques caractéristiques traitées sont classées automatiquement dans l'une des trois catégories prédéfinies de gestes de boxe. À ce stade, le geste de boxe est alors considéré comme ayant été reconnu.

Éventuellement, lors d'une étape 112, à chaque fois qu'un geste de boxe est reconnu, cette information est automatiquement transmise au serveur 18 par l'intermédiaire de la liaison sans fil 16. Le serveur 18 peut alors réaliser des traitements supplémentaires comme, par exemple, afficher ces informations sur un écran, les transmettre à d'autres appareils ou autres.

La figure 6 représente un autre procédé de reconnaissance automatique d'un geste d'un boxeur susceptible d'être implémenté à la place du procédé de la figure 5 dans le dispositif 2. Le procédé de la figure 6 est identique au procédé de la figure 5, sauf que la phase de reconnaissance 90 est remplacée par une phase 120. La phase 120 est identique à la phase 90 sauf que l'étape d'exécution 98 est remplacée par une étape 122. L'étape 122 est identique à l'étape 98 sauf que les grandeurs physiques caractéristiques sont exprimées dans un repère inertiel $R_i$ et non pas dans le repère mobile $R_m$. Pour cela, chaque accélération mesurée dans le repère $R_m$ est convertie en une accélération exprimée dans le repère inertiel Ri. Par exemple, pour faire cela, le module 24 implémente la relation suivante :

$$A_{tcRi} = q^{\star} \otimes A_{tcRm} \otimes q$$

où :

- $A_{tcRi}$ est le vecteur accélération exprimé dans le repère $R_i$,
- $A_{tcRm}$ est le vecteur accélération mesuré dans le repère $R_m$,
- q et q* sont, respectivement, le quaternion d'attitude et son conjugué, et
- le symbole « o »est l'opérateur de multiplication de quaternions.

La valeur du quaternion d'attitude q est typiquement délivrée par la centrale inertielle 20 et acquise par le microprocesseur 10.

Ensuite, la machine d'états mise en œuvre est la même que celle décrite en référence à la figure 3, sauf que les accélérations $A_{tcXm}$, $A_{tcYm}$ et $A_{tcZm}$ sont celles exprimées dans le repère Ri.

Chapitre II : Variantes :

Chapitre II.1: Variantes du dispositif :

Les capteurs peuvent être disposés à un endroit quelconque sur l'avant-bras du boxeur pour mesurer l'accélération et la vitesse angulaire du poing. Par exemple, en variante, les capteurs sont intégrés à l'intérieur d'un gant de boxe. Dans une autre variante, ils sont fixés sur le coude du boxeur.

Les capteurs ne sont pas nécessairement intégrés dans un même boîtier. Par exemple, l'accéléromètre et le gyromètre sont logés dans des boîtiers différents mécaniquement indépendants l'un de l'autre. Dans ce cas, l'accéléromètre et le gyromètre peuvent être fixés à des emplacements différents sur l'avant-bras 8.

Le moyen de fixation 6 du boîtier 4 sur l'avant-bras du boxeur n'est pas nécessairement un bracelet. Par exemple, ce moyen de fixation peut aussi être un gant de boxe. Dans ce dernier cas, le boîtier 4 est par exemple intégré à l'intérieur de ce gant de boxe.

Des composants du boîtier 2 peuvent être déportés. Par exemple, le module 24 et le classifieur 26 peuvent être implémentés à l'intérieur du serveur 18. Dans ce cas, les mesures acquises par le microprocesseur 10 sont directement transmises au serveur 18 et c'est le serveur 18 qui exécute le module 24 et le classifieur 26 sur les mesures reçues. Dans une variante intermédiaire, seul le classifieur 26 est déporté dans le serveur 18.

La centrale inertielle 20 peut comporter des capteurs supplémentaires utiles pour caractériser le geste du boxeur. Par exemple, la centrale inertielle 20 peut en plus comporter un magnétomètre tri-axe. Les mesures de ce magnétomètre tri-axe sont alors utilisées pour construire des grandeurs physiques caractéristiques supplémentaires et différentes de celles précédemment décrites. Ces grandeurs physiques supplémentaires sont alors utilisées par le classifieur 26 pour classer le geste du boxeur dans une catégorie prédéfinie. La centrale inertielle 20 peut aussi comporter un vélocimètre qui mesure directement la vitesse instantanée de l'avant-bras 8 dans les directions $X_m$, $Y_m$ et $Z_m$. Dans ce dernier cas, les vitesses instantanées ne sont pas calculées par intégration de l'accélération mesurée.

Chapitre II.2 : Variantes du module 24 :

La recherche de l'instant $t_i$ peut être réalisée différemment. Par exemple, si les conventions de signes pour l'accélération sont inversées, c'est-à-dire que l'accélération est négative lorsque le poing accélère dans la direction $X_m$,

alors l'instant $t_i$ correspond à l'instant où l'accélération dans la direction $X_m$ change de signe pour devenir positive.

Le module 24 peut être réalisé différemment. Par exemple, le module 24 n'est pas nécessairement implémenté sous la forme d'une machine d'états. A titre d'illustration, le module 24 peut être réalisé comme décrit dans le document US20160263458. Ainsi, le module 24 détermine un instant $t_f$ qui correspond à l'instant de fin du geste à reconnaître. Par exemple, l'instant $t_f$ est déterminé comme décrit dans le document US20140372440 ou comme décrit dans le document US20160263458. Si un instant $t_f$ a pu être déterminé, cela valide le fait que les mesures réalisées dans l'intervalle [$t_d$ ; $t_f$] correspondent bien à un geste du boxeur à reconnaître.

L'instant $t_d$ peut être déterminé différemment. Par exemple, il peut être déterminé comme décrit dans le document US20160263458, c'est-à-dire calculé en soustrayant à l'instant $t_f$ déterminé une durée $\Delta T$ prédéterminée.

Dans les variantes ci-dessus, l'instant $t_i$ est alors identifié dans l'intervalle [$t_d$ ; $t_f$] en cherchant dans cet intervalle, par exemple, le dernier instant $t_i$ où l'accélération instantanée dans la direction $X_m$ change de signe pour devenir négative. On remarque que dans cette variante, le module 24 détermine l'instant $t_i$ uniquement après qu'il ait validé que le geste actuel du boxeur est bien un geste à reconnaître.

Comme indiqué ci-dessus, le module 24 peut construire d'autres grandeurs physiques caractéristiques susceptibles d'être utilisées par le classifieur 26.

Dans une autre variante, la construction des grandeurs physiques caractéristiques n'est pas réalisée par le module 24 mais par un autre module logiciel du microprocesseur 10. Par exemple, cet autre module logiciel est uniquement exécuté après que le module 24 ait validé que le geste actuel est bien un geste à reconnaître. Dans ce cas, la construction des grandeurs physiques caractéristiques n'est pas exécutée en même temps que le module 24 valide que le geste actuel est bien un geste à reconnaître mais uniquement après et seulement dans le cas où il a été validé que le geste actuel est bien un geste à reconnaître.

D'autres machines d'états que celle décrite en référence à la figure 3 sont possibles. Par exemple, la machine d'états de la figure 3 peut être simplifiée en supprimant certains états comme les états « 3 » ou « 4 » ou « 7 ». À l'inverse, des états supplémentaires et des transitions supplémentaires peuvent être ajoutés dans la machine d'états de la figure 3.

Chapitre II.3 : Variantes du classifieur :

Ici, le classifieur a été décrit comme étant de préférence réalisé sous la forme d'un réseau de neurones de faible profondeur. Toutefois, en variante, le classifieur peut être réalisé à l'aide d'un réseau de neurones comportant plusieurs couches cachées.

Le classifieur peut aussi être réalisé en utilisant une autre technologie que les réseaux de neurones. Par exemple, en variante, le classifieur est une machine à vecteurs de support connu sous l'acronyme SVM (« Support Vector Machine »), un classifieur Bayésien naïf ou autres. Le classifieur peut aussi être réalisé comme décrit dans le document US20160263458.

Le nombre de gestes de boxe que l'on cherche à reconnaître peut être plus grand ou plus petit que dans l'exemple de réalisation décrit précédemment. Par exemple, dans une version simplifiée, le dispositif 2 et donc le classifieur 26 est conçu pour reconnaître un seul geste prédéfini du boxeur.

À l'inverse, le classifieur 26 peut aussi facilement être adapté pour reconnaître d'autres gestes supplémentaires en plus ou à la place des trois gestes particuliers précédemment décrits. À cet effet, le nombre de neurones de la couche 52 est ajusté en conséquence. Par exemple, un neurone supplémentaire est ajouté à la couche 52 pour reconnaître le geste connu sous le nom de direct long du bras arrière ou « cross » en anglais. Des neurones supplémentaires peuvent être également ajoutés à la couche 52, chacun de ces neurones correspondant à l'un des gestes décrits en référence aux figures 7 à 14.

Chapitre II.4 : Autres variantes :

Ce qui a été décrit ici dans le cas particulier d'un avant-bras droit se transpose sans difficulté au cas où le dispositif 2 est fixé sur l'avant-bras gauche du boxeur. Toutefois, dans ce cas, par exemple, les signes des mesures réalisées le long ou autour de l'axe dans la direction $Y_m$ sont systématiquement inversés. Grâce à une telle inversion, les conditions associées aux différentes transitions de la machine d'états de la figure 3 n'ont pas besoin d'être modifiées.

En variante, les étapes 98 et 110 ne sont pas exécutées en parallèle de l'étape 92 de mesure mais après. Ainsi, dans un mode de réalisation particulier, les mesures sont acquises et enregistrées dans la mémoire 12 lorsque le boxeur s'entraîne. Ensuite, par exemple, après la fin de l'entraînement du boxeur, les étapes 98 et 110 sont exécutées pour reconnaître automatiquement les gestes que le boxeur a réalisés lors de son entraînement.

Le dispositif 2 peut aussi bien être utilisé dans le contexte d'un match de boxe, d'un entraînement d'un boxeur mais aussi dans tout autre contexte, comme celui des jeux vidéo, où l'un des joueurs simule des gestes de boxe.

De façon plus générale, le dispositif 2 peut être adapté pour reconnaître d'autres gestes prédéterminés que des gestes de boxe. Par exemple, l'enseignement donné ici dans le cas particulier des gestes de boxe peut être adapté pour reconnaître d'autres gestes prédéterminés, comme ceux réalisés dans tous les sports de contacts. A titre d'illustration d'autres sports de contact, on peut citer tous les sports de combat et tous les sports impliquant un impact avec le poing ou l'avant bras sur un objet ou un autre joueur. Ainsi, le dispositif 2 peut aussi être adapté à des sports d'équipes tels que le rugby, le football américain ou autres.

Chapitre III : Avantages des modes de réalisation décrits :

Le fait de construire les grandeurs physiques caractéristiques utilisées par le classifieur uniquement à partir des mesures réalisées dans l'intervalle [$t_d$ ; $t_i$] conduit à ignorer pour la classification les mesures réalisées juste avant ou pendant la brusque décélération qui se produit au moment de l'impact sur la cible ou lorsque l'élongation du bras est maximale. Il a été observé qu'en ignorant ces mesures qui précèdent immédiatement l'impact ou l'arrêt du geste du boxeur, la fiabilité du procédé de reconnaissance du geste du boxeur et fortement améliorée. Il est supposé que cela provient du fait qu'en procédant ainsi, les très fortes variations de l'accélération et de la vitesse angulaire observées lors de la fin du geste du boxeur sont ignorées. En effet, il semble que les mesures réalisées par l'accéléromètre lors de la fin du geste du boxeur sont moins fiables que celles réalisées pendant la phase d'accélération de l'avant-bras du boxeur.

Le fait de réinitialiser le module 24 pour qu'il soit capable d'identifier un nouveau geste du boxeur à partir d'une condition sur les vitesses angulaires $G_{tcYm}$ et/ou $G_{tcZm}$ permet de détecter de façon fiable la fin d'un geste du boxeur lorsque le boxeur enchaîne plusieurs gestes immédiatement les uns après les autres.

Le fait que les grandeurs physiques caractéristiques soient construites dans un repère inertiel plutôt que dans le repère mobile $R_m$ accroît la fiabilité du procédé de reconnaissance.

De façon surprenante, il a été déterminé qu'un réseau de neurones avec une seule couche cachée améliore la fiabilité du procédé de reconnaissance par rapport au cas où un réseau de neurones à plusieurs couches cachées serait utilisé.

Procéder à la construction des grandeurs physiques caractéristiques avant que le module 24 ait validé que le geste actuel du boxeur est un geste à reconnaître permet d'accélérer le procédé de reconnaissance automatique de ce geste.

**Revendications**

1. Procédé de reconnaissance automatique d'un geste prédéterminé d'un utilisateur, ce procédé comportant les étapes suivantes :

    a) l'acquisition (96), à une fréquence d'échantillonnage prédéterminée ($f_e$), des mesures d'un accéléromètre tri-axes (30) et d'un gyromètre tri-axes (32) chacun fixé sur un avant-bras de l'utilisateur,
    b) la construction (98) de plusieurs grandeurs physiques caractéristiques du geste de l'utilisateur à partir des mesures acquises de l'accéléromètre et du gyromètre qui ont été réalisées à partir d'un instant td où débute le geste de l'utilisateur et sans prendre en compte les mesures acquises de l'accéléromètre et du gyromètre réalisées avant cet instant td, puis
    c) la classification (110) du geste de l'utilisateur dans une catégorie prédéfinie de geste, choisie parmi au moins trois catégories prédéfinies possibles de gestes, uniquement à partir de ces grandeurs physiques caractéristiques construites lors de l'étape b),

    **caractérisé en ce que**, lors de l'étape b), toutes les grandeurs physiques caractéristiques, construites à partir des mesures acquises réalisées par l'accéléromètre, sont construites à partir des mesures acquises réalisées par l'accéléromètre uniquement dans un intervalle de temps [$t_d$ ; $t_i$], où l'instant $t_i$ est un instant, postérieur à l'instant $t_d$, où l'accélération mesurée du poing de l'utilisateur dans une direction $X_m$ change de signe et devient négative, la direction $X_m$ étant la direction parallèle à l'avant bras de l'utilisateur, dirigée du coude de l'utilisateur vers le poing de l'utilisateur, et une accélération négative dans la direction $X_m$ correspondant à un ralentissement de la vitesse du poing de l'utilisateur dans cette direction $X_m$, de sorte que les grandeurs physiques caractéristiques ainsi construites sont indépendantes des mesures de l'accéléromètre réalisées après l'instant $t_i$ et donc indépendante des mesures de l'accéléromètre réalisées pendant la brusque décélération qui marque la fin du geste de l'utilisateur.

2. Procédé selon la revendication 1, dans lequel le procédé réinitialise (98) automatiquement la construction des grandeurs physiques caractéristiques lorsque l'une des conditions suivantes est satisfaite :

    - la variation de la vitesse angulaire, autour d'un axe parallèle à la direction $X_m$ et/ou autour d'un axe parallèle à une direction orthogonale à la direction $X_m$, dépasse un seuil prédéterminé, ou
- l'intervalle de temps écoulé depuis l'instant td dépasse une durée prédéterminée.

3. Procédé selon l'une quelconque des revendications précédentes, dans lequel lors de l'étape b), au moins une grandeur physique caractéristique est construites à partir de mesure de l'accélération exprimée dans un repère inertiel.

4. Procédé selon l'une quelconque des revendications précédentes, dans lequel l'étape c) (110) est réalisée par un réseau de neurones comportant une seule couche cachée.

5. Procédé selon l'une quelconque des revendications précédentes, dans lequel :

   - après l'exécution de l'étape b) et avant l'exécution de l'étape c), le procédé comporte une étape (98) de validation que les grandeurs physiques caractéristiques construites lors de l'étape b) correspondent à un geste de l'utilisateur à reconnaître, cette validation étant réalisée à partir des mesures acquises, puis
   - s'il a été validé que les grandeurs physiques caractéristiques construites lors de l'étape b) (98) correspondent à un geste de l'utilisateur à reconnaître, le déclenchement de l'exécution de l'étape c) et, dans le cas contraire, l'inhibition du déclenchement de l'étape c) et la réinitialisation des grandeurs physiques caractéristiques construites à leurs valeurs par défaut.

6. Procédé selon la revendication 5, dans lequel l'étape de validation est réalisée par une machine d'états.

7. Procédé selon l'une quelconque des revendications précédentes, dans lequel lors de l'étape b), les grandeurs physiques caractéristiques suivantes sont construites :

   - le maximum, le minimum et la moyenne des accélérations instantanées mesurées pendant l'intervalle $[t_d ; t_i]$ dans trois directions orthogonales entre elles,
   - le maximum, le minimum et la moyenne des vitesses instantanées de l'avant bras pendant l'intervalle $[t_d ; t_i]$ dans trois directions orthogonales entre elles,
   - le maximum, le minimum et la moyenne des vitesses angulaires instantanées mesurées pendant l'intervalle $[t_d ; t_i]$ au tour de trois axes orthogonaux de rotation,
   - le maximum, le minimum et la moyenne des distances instantanées parcourues, dans trois directions orthogonales entre elles, pendant l'intervalle $[t_d ; t_i]$.

8. Procédé selon l'une quelconque des revendications précédentes, dans lequel le geste prédéterminé est un geste prédéterminé d'un boxeur.

9. Procédé selon l'une quelconque des revendications précédentes, dans lequel, lors de l'étape b), les grandeurs physiques caractéristiques sont construites à partir des mesures acquises réalisées, par l'accéléromètre et le gyromètre, uniquement dans l'intervalle de temps $[t_d ; t_i]$.

10. Support d'enregistrement d'informations lisible par un microprocesseur, **caractérisé en ce qu'**il comporte des instructions pour l'exécution d'un procédé conforme à l'une quelconque des revendications précédentes, lorsque ces instructions sont exécutées par le microprocesseur.

11. Dispositif de reconnaissance automatique d'un geste prédéterminé d'un utilisateur, ce dispositif comportant :

   - un accéléromètre tri-axe (30) et un gyromètre tri-axe (32),
   - des moyens (6) de fixation de l'accéléromètre tri-axe et du gyromètre tri-axe sur l'avant-bras de l'utilisateur, et
   - un microprocesseur (10) programmé pour exécuter les étapes suivantes :

      a) l'acquisition (96), à une fréquence d'échantillonnage prédéterminée ($f_e$), des mesures de l'accéléromètre tri-axes (30) et du gyromètre tri-axes (32) lorsqu'ils sont chacun fixés sur un avant-bras de l'utilisateur,
      b) la construction (98) de plusieurs grandeurs physiques caractéristiques du geste de l'utilisateur à partir des mesures acquises de l'accéléromètre et du gyromètre qui ont été réalisées à partir d'un instant $t_d$ où débute le geste de l'utilisateur et sans prendre en compte les mesures acquises de l'accéléromètre et du gyromètre réalisées avant cet instant td, puis
      c) la classification (110) du geste de l'utilisateur dans une catégorie prédéfinie de geste, choisie parmi au moins trois catégories prédéfinies possibles de gestes, uniquement à partir de ces grandeurs physiques caractéristiques construites lors de l'étape b),

**caractérisé en ce que** le microprocesseur est également programmé pour construire, lors de l'étape b), toutes les grandeurs physiques caractéristiques, construites à partir des mesures acquises réalisées par l'accéléromètre, à partir des mesures acquises réalisées par l'accéléromètre uniquement dans un intervalle de temps $[t_d ; t_i]$, où l'instant $t_i$ est un instant, postérieur à l'instant $t_d$, où l'accélération mesurée du poing de l'utilisateur dans une direction $X_m$ change de signe et devient négative, la direction $X_m$ étant la direction parallèle à l'avant bras de l'utilisateur, dirigée du coude de l'utilisateur vers le poing de l'utilisateur, et une accélération négative dans la direction $X_m$ correspondant à un ralentissement de la vitesse du poing de l'utilisateur dans cette direction $X_m$, de sorte que les grandeurs physiques caractéristiques ainsi construites sont indépendantes des mesures de l'accéléromètre réalisées après l'instant $t_i$ et donc indépendante des mesures de l'accéléromètre réalisées pendant la brusque décélération qui marque la fin du geste de l'utilisateur.

## Patentansprüche

1. Verfahren zur automatischen Erkennung einer vorbestimmten Geste eines Benutzers, wobei dieses Verfahren die folgenden Schritte umfasst:

   a) Erfassen (96), mit einer vorbestimmten Abtastfrequenz ($f_e$), der Messungen eines Drei-Achsen-Beschleunigungsmessers (30) und eines Drei-Achsen-Gyrometers (32), die jeweils an einem Unterarm des Benutzers befestigt sind,
   b) Ermitteln (98) mehrerer physikalischer Größen, die für die Geste des Benutzers charakteristisch sind, anhand der durch den Beschleunigungsmesser und das Gyrometer erfassten Messungen, die ab einem Zeitpunkt td, an dem die Geste des Benutzers beginnt, durchgeführt wurden, und ohne Berücksichtigung der durch den Beschleunigungsmesser und das Gyrometer erfassten Messungen, die vor diesem Zeitpunkt td durchgeführt wurden, dann
   c) Einordnen (110) der Geste des Benutzers in eine vordefinierte Gestenkategorie, ausgewählt aus mindestens drei möglichen vordefinierten Gestenkategorien, ausschließlich anhand dieser während des Schritts b) ermittelten charakteristischen physikalischen Größen,
   **dadurch gekennzeichnet, dass** während des Schritts b) alle charakteristischen physikalischen Größen, die anhand der erfassten Messungen, die durch den Beschleunigungsmesser durchgeführt wurden, ermittelt werden, anhand der erfassten Messungen ermittelt werden, die durch den Beschleunigungsmesser ausschließlich in einem Zeitintervall $[t_d; t_i]$ durchgeführt wurden, wobei der Zeitpunkt $t_i$ ein Zeitpunkt ist, der nach dem Zeitpunkt td liegt und an dem die gemessene Beschleunigung der Faust des Benutzers in einer Richtung $X_m$ das Vorzeichen wechselt und negativ wird, wobei die Richtung $X_m$ die zu dem Unterarm des Benutzers parallele Richtung ist und vom Ellbogen des Benutzers zur Faust des Benutzers hin gerichtet ist und eine negative Beschleunigung in der Richtung $X_m$ einer Verlangsamung der Geschwindigkeit der Faust des Benutzers in dieser Richtung $X_m$ entspricht, sodass die so ermittelten charakteristischen physikalischen Größen von den Messungen des Beschleunigungsmessers, die nach dem Zeitpunkt $t_i$ durchgeführt werden, unabhängig sind und somit von den Messungen des Beschleunigungsmessers, die während der abrupten Verzögerung durchgeführt werden, welche das Ende der Geste des Benutzers markiert, unabhängig sind.

2. Verfahren nach Anspruch 1, wobei das Verfahren das Ermitteln der charakteristischen physikalischen Größen automatisch zurücksetzt (98), wenn eine der folgenden Bedingungen erfüllt ist:

   - die Änderung der Winkelgeschwindigkeit um eine zu der Richtung $X_m$ parallele Achse und/oder um eine Achse, die zu einer zu der Richtung $X_m$ orthogonalen Richtung parallel ist, überschreitet einen vorbestimmten Schwellenwert oder
   - das seit dem Zeitpunkt td verstrichene Zeitintervall überschreitet eine vorbestimmte Dauer.

3. Verfahren nach einem der vorhergehenden Ansprüche, wobei während des Schritts b) mindestens eine charakteristische physikalische Größe anhand einer Messung der Beschleunigung ermittelt wird, die in einem Inertialsystem beschrieben wird.

4. Verfahren nach einem der vorhergehenden Ansprüche, wobei der Schritt c) (110) durch ein neuronales Netz durchgeführt wird, das eine einzige verborgene Schicht umfasst.

5. Verfahren nach einem der vorhergehenden Ansprüche, wobei:

- nach dem Ausführen des Schritts b) und vor dem Ausführen des Schritts c) das Verfahren einen Schritt (98) des Validierens umfasst, dass die während des Schritts b) ermittelten charakteristischen physikalischen Größen einer zu erkennenden Geste des Benutzers entsprechen, wobei diese Validierung anhand der erfassten Messungen durchgeführt wird, dann
- wenn validiert wurde, dass die während des Schritts b) (98) ermittelten charakteristischen physikalischen Größen einer zu erkennenden Geste des Benutzers entsprechen, das Ausführen des Schritts c) ausgelöst wird, und im gegenteiligen Fall das Auslösen des Schritts c) verhindert wird und die ermittelten charakteristischen physikalischen Größen auf ihre standardmäßigen Werte zurückgesetzt werden.

6. Verfahren nach Anspruch 5, wobei der Schritt des Validierens durch eine Zustandsmaschine durchgeführt wird.

7. Verfahren nach einem der vorhergehenden Ansprüche, wobei während des Schritts b) die folgenden charakteristischen physikalischen Größen ermittelt werden:

- das Maximum, das Minimum und der Mittelwert der momentanen Beschleunigungen, die während des Intervalls $[t_d; t_i]$ in drei zueinander orthogonalen Richtungen gemessen werden,
- das Maximum, das Minimum und der Mittelwert der momentanen Geschwindigkeiten des Unterarms während des Intervalls $[t_d; t_i]$ in drei zueinander orthogonalen Richtungen,
- das Maximum, das Minimum und der Mittelwert der momentanen Winkelgeschwindigkeiten, die während des Intervalls $[t_d; t_i]$ um drei orthogonale Drehachsen gemessen werden,
- das Maximum, das Minimum und der Mittelwert der zurückgelegten momentanen Strecken, in drei zueinander orthogonalen Richtungen, während des Intervalls $[t_d; t_i]$.

8. Verfahren nach einem der vorhergehenden Ansprüche, wobei die vorbestimmte Geste eine vorbestimmte Geste eines Boxers ist.

9. Verfahren nach einem der vorhergehenden Ansprüche, wobei während des Schritts b) die charakteristischen physikalischen Größen anhand der erfassten Messungen ermittelt werden, die durch den Beschleunigungsmesser und das Gyrometer ausschließlich in dem Zeitintervall $[t_d; t_i]$ durchgeführt wurden.

10. Informationsaufzeichnungsmedium, das von einem Mikroprozessor gelesen werden kann, **dadurch gekennzeichnet, dass** es Anweisungen zum Ausführen eines Verfahrens nach einem der vorhergehenden Ansprüche umfasst, wenn diese Anweisungen von dem Mikroprozessor ausgeführt werden.

11. Vorrichtung zur automatischen Erkennung einer vorbestimmten Geste eines Benutzers, wobei diese Vorrichtung Folgendes umfasst:

- einen Drei-Achsen-Beschleunigungsmesser (30) und ein Drei-Achsen-Gyrometer (32),
- Mittel (6) zum Befestigen des Drei-Achsen-Beschleunigungsmessers und des Drei-Achsen-Gyrometers an dem Unterarm des Benutzers und
- einen Mikroprozessor (10), der dazu programmiert ist, die folgenden Schritte auszuführen:

a) Erfassen (96), mit einer vorbestimmten Abtastfrequenz ($f_e$), der Messungen des Drei-Achsen-Beschleunigungsmessers (30) und des Drei-Achsen-Gyrometers (32), während sie jeweils an einem Unterarm des Benutzers befestigt sind,
b) Ermitteln (98) mehrerer physikalischer Größen, die für die Geste des Benutzers charakteristisch sind, anhand der durch den Beschleunigungsmesser und das Gyrometer erfassten Messungen, die ab einem Zeitpunkt td, an dem die Geste des Benutzers beginnt, durchgeführt wurden, und ohne Berücksichtigung der durch den Beschleunigungsmesser und das Gyrometer erfassten Messungen, die vor diesem Zeitpunkt td durchgeführt wurden, dann
c) Einordnen (110) der Geste des Benutzers in eine vordefinierte Gestenkategorie, ausgewählt aus mindestens drei möglichen vordefinierten Gestenkategorien, ausschließlich anhand dieser während des Schritts b) ermittelten charakteristischen physikalischen Größen,
**dadurch gekennzeichnet, dass** der Mikroprozessor ferner dazu programmiert ist, während des Schritts b) alle charakteristischen physikalischen Größen, die anhand der erfassten Messungen, die durch den Beschleunigungsmesser durchgeführt wurden, ermittelt werden, anhand der erfassten Messungen zu ermitteln, die durch den Beschleunigungsmesser ausschließlich in einem Zeitintervall $[t_d; t_i]$ durchgeführt wurden, wobei der Zeitpunkt $t_i$ ein Zeitpunkt ist, der nach dem Zeitpunkt $t_d$ liegt und an dem die gemessene Beschleunigung der Faust des Benutzers in einer Richtung $X_m$ das Vorzeichen wechselt und negativ wird, wobei die Richtung $X_m$ die zu dem Unterarm des Benutzers parallele Richtung ist und vom Ellbogen des Benutzers zur Faust des Benutzers hin gerichtet ist und eine negative Beschleunigung in der Richtung $X_m$ einer Verlangsamung der Geschwindigkeit der Faust des Benutzers in dieser Richtung $X_m$ entspricht, sodass die so ermittelten charakteristischen physikalischen Größen von den Messungen des Beschleunigungsmessers, die nach dem Zeitpunkt $t_i$ durchgeführt werden, unabhängig sind und somit von den Messungen des Beschleunigungsmessers, die während der abrupten Verzögerung durchgeführt werden, welche das Ende der Geste des Benutzers markiert, unabhängig sind.

**Claims**

1. Method for automatic recognition of a predetermined gesture of a user, this method comprising the following steps:

    a) the acquisition (96), at a predetermined sampling frequency ($f_e$), of the measurements of a triaxial accelerometer (30) and of a triaxial gyrometer (32), each fixed onto a forearm of the user,
    b) the construction (98) of several characteristic physical quantities of the gesture of the user from the measurements acquired from the accelerometer and from the gyrometer which have been performed from an instant td at which the gesture of the user begins and without taking account of the measurements acquired from the accelerometer and from the gyrometer performed before this instant td, then
    c) the classification (110) of the gesture of the user in a predefined gesture category, chosen from among at least three possible predefined categories of gestures, only on the basis of these characteristic physical quantities constructed in the step b), **characterized in that**, in the step b), all the characteristic physical quantities, constructed from the acquired measurements performed by the accelerometer, are constructed from the acquired measurements performed by the accelerometer only within a time interval $[t_d; t_i]$, where the instant $t_i$ is an instant, later than the instant td, at which the measured acceleration of the fist of the user in a direction $X_m$ changes sign and becomes negative, the direction $X_m$ being the direction parallel to the forearm of the user, directed from the elbow of the user towards the fist of the user, and a negative acceleration in the direction $X_m$ corresponding to a slowing down of the speed of the fist of the user in this direction $X_m$, such that the characteristic physical quantities thus constructed are independent of the measurements of the accelerometer performed after the instant $t_i$ and therefore independent of the measurements of the accelerometer performed during the abrupt deceleration which marks the end of the gesture of the user.

2. Method according to Claim 1, wherein the method automatically resets (98) the construction of the characteristic physical quantities when one of the following conditions is satisfied:

    - the variation of the angular speed, about an axis parallel to the direction $X_m$ and/or about an axis parallel to a direction orthogonal to the direction $X_m$, exceeds a predetermined threshold, or
    - the time interval elapsed since the instant td exceeds a predetermined duration.

3. Method according to either one of the preceding claims, wherein, in the step b), at least one characteristic physical quantity is constructed from a measurement of the acceleration expressed in an inertial reference frame.

4. Method according to any one of the preceding claims, wherein the step c) (110) is performed by a neural network comprising a single hidden layer.

5. Method according to any one of the preceding claims, wherein:

    - after the execution of the step b) and before the execution of the step c), the method comprises a step (98) of confirmation that the characteristic physical quantities constructed in the step b) correspond to a gesture of the user to be recognized, this confirmation being made from the acquired measurements, then
    - if it has been confirmed that the characteristic physical quantities constructed in the step b) (98) correspond to a gesture of the user to be recognized, the triggering of the execution of the step c) and, otherwise, the inhibiting of the triggering of the step c) and, in the contrary case, the resetting of the constructed characteristic physical quantities to their default values.

6. Method according to Claim 5, wherein the confirmation step is performed by a state machine.

7. Method according to any one of the preceding claims, wherein, in the step b), the following characteristic physical quantities are constructed:

- the maximum, the minimum and the average of the instantaneous accelerations measured during the interval $[t_d; t_i]$ in three mutually orthogonal directions,
- the maximum, the minimum and the average of the instantaneous speeds of the forearm during the interval $[t_d; t_i]$ in three mutually orthogonal directions,
- the maximum, the minimum and the average of the instantaneous angular speeds measured during the interval $[t_d; t_i]$ about three orthogonal axes of rotation,
- the maximum, the minimum and the average of the instantaneous distances travelled, in three mutually orthogonal directions, during the interval $[t_d; t_i]$.

8. Method according to any one of the preceding claims, wherein the predetermined gesture is a predetermined gesture of a boxer.

9. Method according to any one of the preceding claims, wherein, in the step b), the characteristic physical quantities are constructed from acquired measurements performed, by the accelerometer and the gyrometer, only in the time interval $[t_d; t_i]$.

10. Microprocessor-readable information storage medium, **characterized in that** it comprises instructions for the execution of a method according to any one of the preceding claims, when these instructions are executed by the microprocessor.

11. Device for automatic recognition of a predetermined gesture of a user, this device comprising:

- a triaxial accelerometer (30) and a triaxial gyrometer (32),
- means (6) for fixing the triaxial accelerometer and the triaxial gyrometer onto the forearm of the user, and
- a microprocessor (10) programmed to execute the following steps:

a) the acquisition (96), at a predetermined sampling frequency ($f_e$), of the measurements of the triaxial accelerometer (30) and of the triaxial gyrometer (32) when they are each fixed onto a forearm of the user,
b) the construction (98) of several characteristic physical quantities of the gesture of the user from the measurements acquired from the accelerometer and from the gyrometer which have been performed from an instant td at which the gesture of the user begins and without taking account of the measurements acquired from the accelerometer and from the gyrometer performed before this instant $t_d$, then
c) the classification (110) of the gesture of the user in a predefined gesture category, chosen from among at least three possible predefined categories of gestures, only on the basis of these characteristic physical quantities constructed in the step b), **characterized in that** the microprocessor is also programmed to construct, in the step b), all the characteristic physical quantities constructed from the acquired measurements performed by the accelerometer, from the acquired measurements performed by the accelerometer only in a time interval $[t_d; t_i]$, where the instant $t_i$ is an instant, later than the instant td, at which the measured acceleration of the fist of the user in a direction $X_m$ changes sign and becomes negative, the direction $X_m$ being the direction parallel to the forearm of the user, directed from the elbow of the user towards the fist of the user, and a negative acceleration in the direction $X_m$ corresponding to a slowing down of the speed of the fist of the user in this direction $X_m$, such that the characteristic physical quantities thus constructed are independent of the measurements of the accelerometer performed after the instant $t_i$ and therefore independent of the measurements of the accelerometer performed during the abrupt deceleration which marks the end of the gesture of the user.

Fig. 1

Fig. 2

Fig. 3

Fig. 4

Fig. 5

Fig. 6

42

42

40

Fig. 7

42

40

Fig. 8

42

40

Fig. 9

42

40

Fig. 10

42

42

40

Fig. 11

40

42

42

42

Fig. 12

Fig. 13

Fig. 14

Fig. 15

Fig. 16

Fig. 17

**EP 3 570 211 B1**

## RÉFÉRENCES CITÉES DANS LA DESCRIPTION

**Documents brevets cités dans la description**

- US 20160263458 A
- US 20140372440 A